# EUROPEAN PATENT APPLICATION

(11) **EP 4 177 541 A1**
(43) Date of publication of application: **10.05.2023**
(21) Application number: 21837818.0
(22) Date of filing: 06.07.2021
(51) Int. Cl.: F25B 21/02, A47J 43/07

(54) **ACTIVE COOLING AGITATOR**

(30) Priority: 06.07.2020 US 202016920879
(71) Applicant: CHONGQING HAIER REFRIGERATION ELECTRIC APPLIANCE CO., LTD., Jiangbei District Chongqing 400026 (CN); Qingdao Haier Refrigerator Co., Ltd, Qingdao, Shandong 266101 (CN); Haier Smart Home Co., Ltd., Qingdao, Shandong 266101 (CN); Haier US Appliance Solutions, Inc., Wilmington, DE 19801 (US)
(72) Inventor: ZDANOW, Andre, Wilmington, Delaware 19801 (US); DUPLESSIS, Samuel Vincent, Wilmington, Delaware 19801 (US); HUNTER, Matthew R., Wilmington, Delaware 19801 (US)
(74) Representative: Lavoix
(86) International application number: PCT/CN2021/104635
(87) International publication number: WO 2022/007773

(57) **Abstract**

A blender appliance, as provided herein, may include a container body, a rotatable blade, a motor, and a thermo-electric heat exchanger. The container body may include an inner shell and a conduction wall. The inner shell may define a fluid cavity. The conduction wall may be spaced apart from the fluid cavity outward along a radial direction. The rotatable blade may be rotatably disposed within the fluid cavity. The motor may be in selective mechanical communication with the rotatable blade to motivate rotation thereof. The thermo-electric heat exchanger may be mounted within the container body in thermal communication with the fluid cavity.

## Description

### TECHNICAL FIELD

The present subject matter relates generally to blender appliances, and more particularly to blender appliances having one or more active elements for controlling the temperature of a mass within a container of a blender appliance.

### BACKGROUND

For common blender appliances or blenders, one of the challenges that exists is regulating the temperature of the contents (e.g., fluid or beverage) held within a container of a blender. In some instances, it may be preferable to keep or consume certain blended food items or beverages at a temperature that is below the ambient temperature surrounding a container. This may be particularly true for frozen beverages, such as smoothies or milkshakes. Of course, any manner of stand-alone containers may be used to heat or cool the food items or beverages from a blender. Unfortunately, this generally requires emptying the blender container and transferring the contents to a new container. Simply leaving the contents within the container of most blenders would often be more convenient. However, most blender containers are unable to prevent the contents from reaching equilibrium with the surrounding environment (e.g., rising in temperature over time).

Passive systems, such as vacuum-insulated blender containers, are used in some blenders to maintain a food or beverage temperature within a container. Such systems may provide a desirable form-factor with relatively little additions in mass. However, since these passive systems are unable to actively add or draw heat to/from the contents of a container, their efficacy is necessarily limited. As an example, if the temperature of a beverage within a blender container is below the ambient temperature, the beverage temperature may only be able to increase over time.

Some active systems exist for regulating the temperature within a stand-alone beverage container through one or more electrical, chemical, or mechanically-motivated heat exchangers independent of the container contents. Nonetheless, these systems may present a number of undesirable drawbacks. For instance, such systems are often very fragile. Even a small impact or drop may cause the electrical, chemical, or mechanically-motivated heat exchanger (or another active component) to break. Oftentimes, the containers including these systems must be cleaned in a very delicate manner since the active component(s) may be damaged by fluid or moisture outside of the container. This often makes such containers especially unsuited for the high-vibration environment of a blender, where a spinning blade actively agitates the contents of the blender container.

As a result, further improvements in the field of blenders would be useful. In particular, it would be advantageous to provide a blender that can actively regulate the temperature of contents within a container, while addressing one or more of the problems identified above.

### SUMMARY

Aspects and advantages of the invention will be set forth in part in the following description, or may be obvious from the description, or may be learned through practice of the invention.

In one exemplary aspect of the present disclosure, a blender appliance is provided. The blender appliance may include a container body, a rotatable blade, a motor, and a thermo-electric heat exchanger. The container body may include an inner shell and a conduction wall. The inner shell may define a fluid cavity. The conduction wall may be spaced apart from the fluid cavity outward along a radial direction. The rotatable blade may be rotatably disposed within the fluid cavity. The motor may be in selective mechanical communication with the rotatable blade to motivate rotation thereof. The thermo-electric heat exchanger may be mounted within the container body in thermal communication with the fluid cavity.

In another exemplary aspect of the present disclosure, a blender appliance is provided. The blender appliance may include a container body, a rotatable blade, a motor, and a thermo-electric heat exchanger. The container body may include an inner shell and a conduction wall. The inner shell may define a fluid cavity. The conduction wall may be spaced apart from the fluid cavity outward along a radial direction. An insulation chamber may be defined between the inner shell and the conduction wall along the radial direction. The rotatable blade may be rotatably disposed within the fluid cavity. The motor may be in selective mechanical communication with the rotatable blade to motivate rotation thereof. The thermo-electric heat exchanger may be mounted within the container body in thermal communication with the fluid cavity. The thermo-electric heat exchanger may be positioned within at least a portion of the insulation chamber.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a perspective view of a blender appliance according to exemplary embodiments of the present disclosure.
FIG. 2 provides a schematic, sectional view of the exemplary blender appliance of FIG. 1, taken along the line 2-2.
FIG. 3 provides a schematic, sectional view of the exemplary blender appliance of FIG. 1, taken along the line 3-3.
FIG. 4 provides a magnified, schematic, sectional view of a portion of the exemplary blender appliance of FIG. 3, framed within the box 4A.
FIG. 5 provides a schematic, sectional view of a blender appliance according to exemplary embodiments of the present disclosure.
FIG. 6 provides a schematic, sectional view of a blender appliance according to further exemplary embodiments of the present disclosure.
FIG. 7 provides a schematic, sectional view of a blender appliance according to still further exemplary embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the term "or" is generally intended to be inclusive (i.e., "A or B" is intended to mean "A or B or both"). The terms "first," "second," and "third" may be used interchangeably to distinguish one component from another and are not intended to signify location or importance of the individual components.

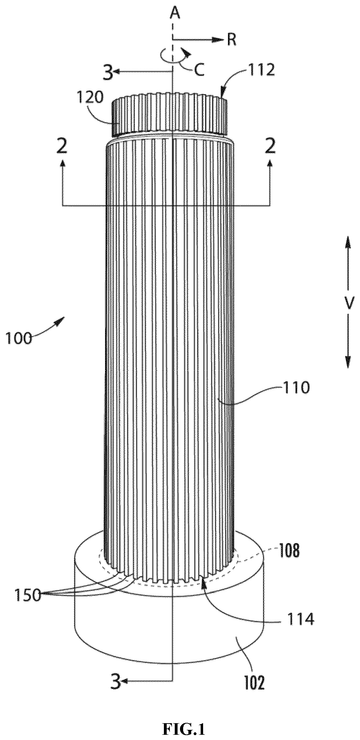

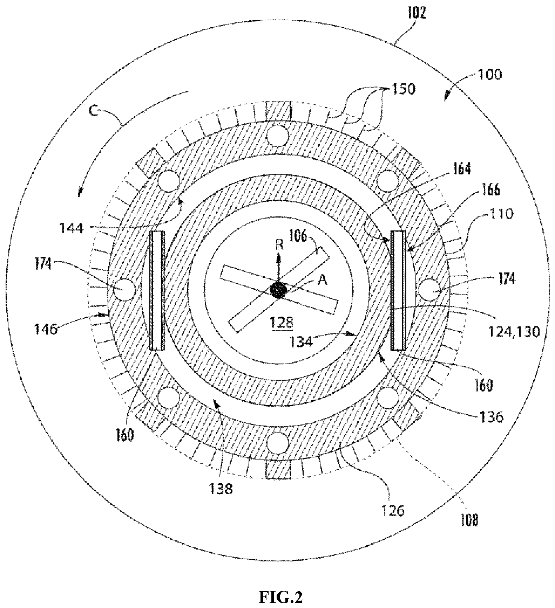

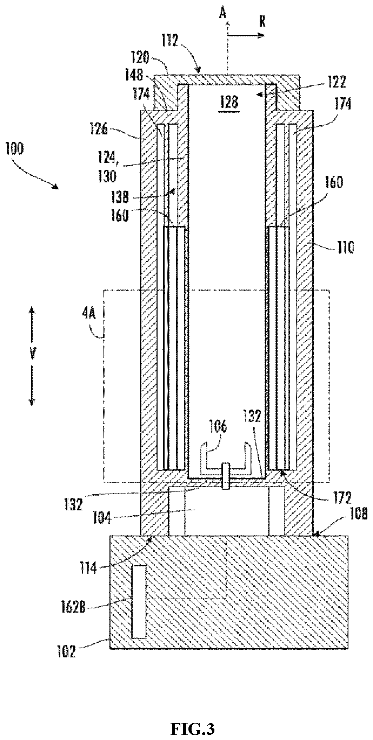

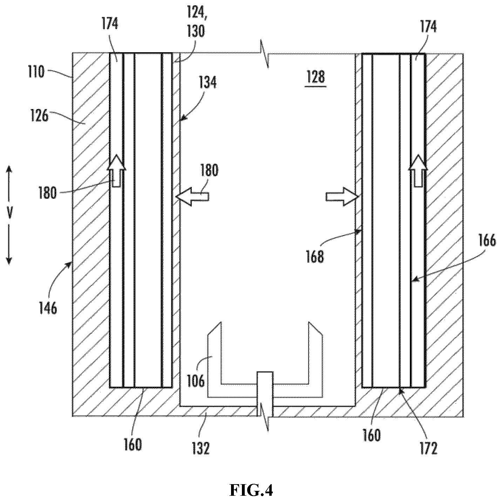

Turning now to the figures, FIG. 1 provides a perspective view of a blender appliance 100 according to exemplary embodiments of the present disclosure. FIGS. 2 and 3 provide discrete sectional views of blender appliance 100 taken along the lines 2-2 and 3-3, respectively, of FIG. 1. FIG. 4 provides a magnified, schematic, sectional of the portion of blender appliance 100 captured in the region 4A of FIG. 3.

Generally, blender appliance 100 defines a vertical direction V. A central axis A may further be defined (e.g., parallel to the vertical direction V). A radial direction R may extend outward from the central axis A (e.g., perpendicular to the vertical direction V), while a circumferential direction C may be defined about the central axis A.

Blender appliance 100 includes a container body 110 and a motor 104, which may be configured to motivate rotation of a rotatable blade 106 that can be disposed within container body 110. As shown, container body 110 extends along the vertical direction V (e.g., from a top end 112 to a bottom end 114). A removable lid 120 may be placed on container body 110 (e.g., at top end 112) where the removable lid 120 may move between a closed position (e.g., as shown in FIG. 1) and an open position (not pictured). The open position covering a fluid opening 122 (FIG. 3) defined by container body 110 and the closed position at least partially uncovering fluid opening 122 to permit a fluid (e.g., beverage) therethrough, as would be generally understood.

Turning especially to FIG. 2, container body 110 provides an inner shell 124 and a conduction wall 126, both of which may extend along the vertical direction V. At least a portion of both inner shell 124 and conduction wall 126 may be spaced apart from central axis A and each other along the radial direction R. Inner shell 124 is a solid (e.g., non-permeable) member that defines a fluid cavity 128 for the receipt and storage of a fluid volume (e.g., a blended food item or beverage) or solid articles (e.g., food items or fluids to be blended). A sidewall 130 of inner shell 124 may generally extend about the central axis A along the circumferential direction C (according to any suitable shape). A bottom wall 132 of inner shell 124 may join sidewall 130 and extend across the central axis A (e.g., at a non-parallel angle relative to the central axis A). Fluid cavity 128 is in fluid communication with fluid opening 122, so the fluid volume may pass through fluid opening 122 as it is being placed into or removed from fluid cavity 128. Thus, fluid cavity 128 may provide an open volume into which food items for a blended beverage may be placed and out of which the blended beverage may be poured. An inner surface 134 of inner shell 124 is directed toward the fluid cavity 128 (e.g., such that the fluid cavity 128 is defined along inner surface 134). An opposite outer surface 136 of inner shell 124 is directed away from fluid cavity 128.

When assembled, conduction wall 126 generally surrounds or extends about inner shell 124 (e.g., along the circumferential direction C and according to any suitable shape). Conduction wall 126 may be provided as solid (e.g., non-permeable member) formed from one or more suitable heat-conducting materials (e.g., aluminum, including alloys thereof). In some such embodiments, conduction wall 126 is coaxial to a portion of inner shell 124 (e.g., sidewall 130) and, optionally, the central axis A. As shown, conduction wall 126 includes an outer surface 146 and an inner surface 144 spaced apart from the fluid cavity 128 (e.g., outward along the radial direction R). A radial space may be defined between conduction wall 126 and inner shell 124. Within the radial space, container body 110 may define an insulation chamber 138. Optionally, one or more suitable thermal insulators (e.g., aerogel, air, etc.) may be disposed within insulation chamber 138 to thermally isolate inner shell 124 and conduction wall 126. Additionally or alternatively, insulation chamber 138 may provide a vacuum-insulated void between conduction wall 126 and inner shell 124.

In some embodiments, an intermediate wall 148 maintains a radial distance between conduction wall 126 and inner shell 124. For instance, intermediate wall 148 may extend radially from the inner surface 144 of conduction wall 126 to the outer surface 146 of inner shell 124. Optionally, intermediate wall 148 may be positioned at a top portion of conduction wall 126 (e.g., proximal to top end 112). Moreover, intermediate wall 148 may join conduction wall 126 to inner shell 124. As an example, in some embodiments, conduction wall 126 and inner shell 124 are formed together as an integral unitary member. Intermediate wall 148 may be a portion of the integral member extending in the radial direction R. As another example, in some embodiments, conduction wall 126 and inner shell 124 are separate attached members. Intermediate wall 148 may be a portion of conduction wall 126, a portion of inner shell 124, or a separate member fixed to conduction wall 126 or inner shell 124 by one or more suitable connectors, adhesives, bonds, etc.

In optional embodiments, one or more conductive fins 150 are provided on conduction wall 126. In particular, a plurality of fins 150 may extend outward from conduction wall 126 (e.g., along the radial direction R). For instance, as shown, the plurality of fins 150 may extend directly from conduction wall 126 (e.g., radially from the outer surface 146 of conduction wall 126) and toward the ambient environment opposite the insulation chamber 138 or fluid cavity 128. Optionally, the plurality of fins 150 may be integrally-formed as a unitary member with conduction wall 126 or, alternatively, as separate attached members joined to conduction wall 126. In some embodiments, each fin 150 extends linearly between top end 112 and bottom end 114. However, alternative embodiments may provide the fins 150 as another suitable shape. In exemplary embodiments, the plurality of fins 150 are each equally spaced (e.g., in parallel) along the circumferential direction C. In alternative embodiments, the spacing between the fins 150 along the circumferential direction C varies such that some adjacent pairs of fins 150 are positioned closer than other adjacent pairs of fins 150.

When assembled, the fins 150 may generally facilitate the heat exchange between conduction wall 126 and the surrounding or ambient environment. Thus, the fins 150 may be formed from one or more suitable heat-conducting materials (e.g., aluminum, including alloys thereof).

Within fluid cavity 128, a rotatable blade 106 is rotatably disposed to cut, mix, or blend the contents of fluid cavity 128. For instance, rotatable blade 106 may be provided as a blade assembly mounted to bottom wall 132. Such a blade assembly may include a drive shaft extending from bottom wall 132, as is understood. Optionally, a female coupling or gear may be provided for selectively engaging a corresponding male coupling or gear on motor 104. Additionally or alternatively, the blade assembly or rotatable blade 106 may be fixedly mounted to the bottom wall 132 such that the rotatable blade 106 generally moves with the bottom wall 132, while still being permitted to rotate relative to bottom wall 132. Also additionally or alternatively, bottom wall 132 may be configured to selectively separate from and attach to sidewall 130 (e.g., via a suitable clamp or threaded connection), as is further understood.

One or more thermo-electric heat exchangers (TEHE 160) are mounted within the container body 110. In particular, a TEHE 160 is mounted in thermal communication with the fluid cavity 128. Generally, TEHE 160 may be any suitable solid state, electrically-driven heat exchanger, such as a Peltier device. TEHE 160 may include two distinct ends 164, 166 (i.e., a first heat exchange end 164 and a second heat exchange end 166). When activated, heat may be selectively directed between the ends 164, 166. In particular, a heat flux created between the junction of the ends 164, 166 may draw heat from one end to the other end (e.g., as driven by an electrical current). In some embodiments, TEHE 160 is operably coupled (e.g., electrically coupled) to a controller 162, which may thus control the flow of current to TEHE 160.

In some embodiments, a base 102 is provided to receive container body 110. For instance, base 102 may receive container body 110 selectively receive container body 110 on a matched receiving zone 108. During blending operations, container body 110 may rest on the receiving zone 108. By contrast, before or after blending operations, container body 110 may separate from base 102 and move freely relative thereto. In some such embodiments, motor 104 is mounted to base 102. Motor 104 may be configured to selectively motivate rotation of rotatable blade 106. For instance, motor 104 may be in selective mechanical communication with rotatable blade 106 such that motor 104 and container body 110 can be alternately separated (e.g., before and after blending operations) and connected (e.g., during blending operations).

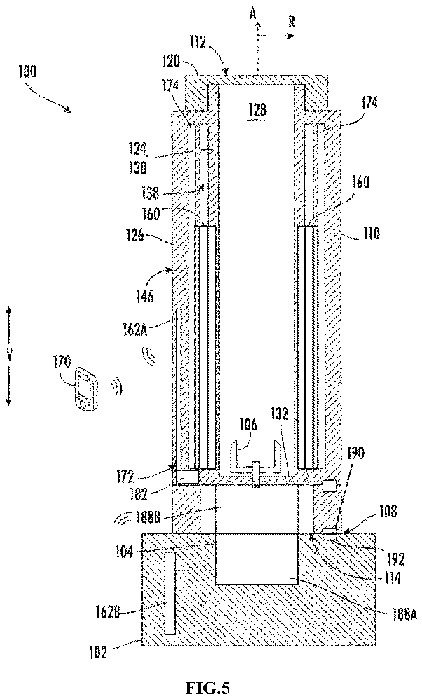

As is understood, motor 104 may physically connect to rotatable blade 106 directly or through one or more intermediate gears. Alternatively, motor 104 may be included as part of a magnetic drive assembly 186, as illustrated in FIG. 5. In some such embodiments, motor 104 includes a primary magnet set 188A directly coupled thereto. A secondary magnet set 188B may be directly coupled to rotatable blade 106. Primary magnet set 188A may be fixed to base 102 with motor 104 while secondary magnet set 188B is fixed to container body 110 and may thus selectively separate from primary magnet set 188A. During blending operations, such as when container body 110 is on the receiving zone 108, the primary and secondary magnet sets 188A, 188B may be aligned and magnetically coupled to each other. Rotation of primary magnet set 188A may thus be transmitted to secondary magnet set 188B (and thereby rotatable blade 106) without direct contact between the two.

In certain embodiments, operation of blender appliance 100 (e.g., at motor 104 or TEHE 160) is generally controlled by controller 162. Controller 162 may be operatively coupled (e.g., electrically coupled via one or more conductive signal lines, wirelessly coupled via one or more wireless communications bands, etc.) to a user interface. The user interface may be provided, for example, at a secondary device 170 (FIG. 5) or at a control pad (not pictured) directly attached to container body 110 or base 102. Moreover, the user interface may provide for user manipulation to select a blending cycle (e.g., speed, timespan, or torque at which rotatable blade 106 should rotate) or a temperature at which fluid cavity 128 should be maintained. Controller 162 may thus be configured to direct various components (e.g., motor 104, TEHE 160, etc.) of blender appliance 100. The direction of controller 162 may thus allow the rotatable blade 106 to be rotated or for blender appliance 100 to reach or maintain a desired temperature in response to user manipulation of user interface. Additionally or alternatively, controller 162 may be operatively coupled to one or more temperature sensors (e.g., thermocouple, thermistor, etc.-not pictured) positioned at a suitable location within base 102 or container body 110 (e.g., in order to measure or determine a temperature within fluid cavity 128). In some such embodiments, controller 162 is configured to direct various components (e.g., motor 104, TEHE 160, etc.) of blender appliance 100 based on one or more measurements of the temperature sensor(s).

Controller 162 may include a memory (e.g., non-transitive storage media) and microprocessor, such as a general or special purpose microprocessor operable to execute programming instructions or micro-control code associated with a cleaning cycle. The memory may represent random access memory such as DRAM, or read only memory such as ROM or FLASH. In one embodiment, the processor executes programming instructions stored in memory. The memory may be a separate component from the processor or may be included onboard within the processor. Alternatively, controller 162 may be constructed without using a microprocessor, e.g., using a combination of discrete analog or digital logic circuitry (such as switches, amplifiers, integrators, comparators, flip-flops, AND gates, and the like) to perform control functionality instead of relying upon software.

Controller 162 may be mounted at any suitable location on blender appliance 100, such as within base 102 (e.g., in selective electrical communication with container body 110) or within container body 110. Optionally, controller 162 may include multiple discrete processors, such as a first controller 162A mounted within container body 110 and a second controller 162B mounted within base 102, as shown in FIG. 5.

Motor, TEHE 160, and other components of blender appliance 100 may be in operative communication (e.g., electrical communication) with controller 162 via one or more signal lines or shared communication busses. User interface (e.g., secondary device 170) may be in operative communication (e.g., wireless communication) with controller 162 via one or more suitable shared networks.

It should be appreciated that secondary device 170 may correspond to any device that may be programmed to communicate controller 162 using one of Wi-Fi, Bluetooth^{®}, ZigBee^{®}, or similar type of wireless communications technologies and networks while running a program that provides for user input. In this context, devices such as, but not limited to, smartphones, tablet devices, and standalone devices may be used to implement the present subject matter.

As shown in the exemplary embodiments of FIGS. 2 through 7, TEHE 160 is mounted within container body 110. In some embodiments, TEHE 160 is further positioned within an unvented sealed chamber (e.g., electronics bay 172) that is fluidly isolated from fluid cavity 128 or the ambient environment. Optionally, the unvented sealed chamber (e.g., electronics bay 172) is defined at least in part by conduction wall 126. For example, electronics bay 172 may be provided within or as part of insulation chamber 138.

Advantageously, within the sealed chamber, TEHE 160 may be shielded from fluid within fluid cavity 128 or the ambient environment. When assembled, one heat exchange end of TEHE 160 may be positioned on inner shell 124. For instance, first end 164 may contact the outer surface 136 of inner shell 124 (e.g., directly or through a suitable thermal paste/adhesive). In some such embodiments, TEHE 160 is positioned radially outward from sidewall 130. Additionally or alternatively, a pair of TEHEs 160 may be positioned at opposite radial ends of sidewall 130. For instance, a first TEHE 160 may be positioned at one radial end of an outer surface 136 of sidewall 130 while a second TEHE 160 is positioned at the opposite radial end of outer surface 136 of sidewall 130 (e.g., parallel to first TEHE 160). Optionally, TEHE(s) 160 may be positioned proximal to bottom wall 132 and distal to opening 122. Nonetheless, it is recognized that any other suitable location or arrangement of TEHE(s) 160 relative to inner shell 124 may be provided. For instance, TEHE 160 may be positioned against a portion of bottom wall 132 below sidewall 130.

In some embodiments, one or more conduction pipes 174 are provided in thermal communication with TEHE 160. In particular, the conduction pipes 174 are mounted within container body 110. At least a portion of at least one conduction pipe 174 may be disposed on TEHE 160. For instance, second end 166 of TEHE 160 may contact conduction pipe 174 (e.g., directly or through a suitable thermal paste/adhesive). In the illustrated embodiments, conduction pipes 174 are positioned radially outward from TEHE 160, although another suitable location may be provided (e.g., depending on position of TEHE 160 within container body 110). Generally, each conduction pipe 174 is in thermal communication with the outer surface 146 of conduction wall 126.

The conduction pipes 174 themselves are generally provided as thermally-conductive bodies formed from one or more suitable materials (e.g., copper or aluminum, including alloys thereof). In some embodiments, the conduction pipes 174 are heat pipes, as the term would be understood by one of ordinary skill. Thus, each conduction pipe 174 may form one or more sealed voids housing a fluid refrigerant therein. In alternative embodiments, one or more of the conduction pipes 174 are formed as solid conductive members such that no void or refrigerant is enclosed within the solid conduction pipe 174. For instance, a conduction pipe 174 may be a solid metal member (e.g., formed from copper or aluminum, including alloys thereof).

As shown, at least a portion of the conduction pipes 174 may be positioned between inner shell 124 and the outer surface 146 (e.g., along the radial direction R). For instance, at the conduction wall 126, one or more of the conduction pipes 174 may have a portion that extends axially along the conduction wall 126 (e.g., an axial portion perpendicular to the radial portion). Optionally, the axial portion of a conduction pipe 174 may be a linear member parallel to the vertical direction V, as shown. Alternatively, the axial portion may extend non-linearly relative to the axial direction A (e.g., as a curved, serpentine, or helical member).

Some or all of the axial portion of a conduction pipe 174 may be enclosed within the conduction wall 126. For instance, as shown in the exemplary embodiments of FIG. 2 through 7, the axial portion of each conduction pipe 174 may be embedded within conduction wall 126 between the inner surface 144 and the outer surface 146. Thus, the axial portion of each conduction pipe 126 is in conductive thermal communication with outer surface 146. Other embodiments may position the axial portion of conduction pipes 174 directly along the inner surface 144 (e.g., along a groove formed by the inner surface 144), while remaining in conductive thermal communication with the outer surface 146.

According to the desired operation of blender appliance 100, TEHE 160 may be provided in a heating or cooling configuration with conduction pipes 174 and container body 110.

As illustrated, especially in FIG. 4, TEHE 160 may be provided in a cooling configuration. Thus, when active, the first end 164 of TEHE 160 may be maintained at a lower temperature than the second end 166 of TEHE 160. As indicated by arrows 180, heat may be directed from the fluid cavity 128 of the inner shell 124 to the first end 164 of TEHE 160. Heat 180 may be subsequently motivated through TEHE 160 to second end 166, as well as conduction pipes 174. From conduction pipes 174, heat 180 may be carried to container body 110, where it may be dissipated to the ambient environment (e.g., from the outer surface 146 or fins 150).

Nonetheless, as is understood, in additional or alternative embodiments, TEHE 160 may be provided in a heated configuration. Thus, when active, the first end 164 of TEHE 160 may be maintained at a higher temperature than the second end 166 of TEHE 160. For instance, heat may be directed to the fluid cavity 128 from the container body 110 (e.g., as absorbed at conduction wall 126 or fins 150). From container body 110, heat may be drawn to the second end 166 of TEHE 160 through conduction pipes 174. Heat at conduction pipes 160 may be motivated to the inner shell 124 and fluid cavity 128 successively through the second end 166 and first end 164 of TEHE 160.

Turning now especially to FIG. 5, a direct-current power source 182 (e.g., battery) may be provided within container body 110 (e.g., to power certain operations thereof). For instance, direct-current power source 182 may be positioned within the unvented electronics bay 172 in electrical communication with TEHE 160. Optionally, first controller 162A may also be in electrical communication with direct-current power source 182.

In exemplary embodiments, direct-current power source 182 is a rechargeable battery formed of, for instance, lithium-ion, nickel-cadmium (NiCd), nickel-metal hydride (NiMH), etc. In some such embodiments, a portion of base 102 is configured to selectively recharge direct-current power source 182 when operably coupled therewith. For instance, second controller 162B may be configured to direct recharging of direct-current power source 182 when container body 110 is positioned on the receiving zone 108 (e.g., mounted to base 102). Second controller 162B may operatively couple (e.g., electrically couple) to direct-current power source 182 to supply a charging current, such as through mated contact pads that include a first pad 190 held on container body 110 and a second pad 192 held on base 102.

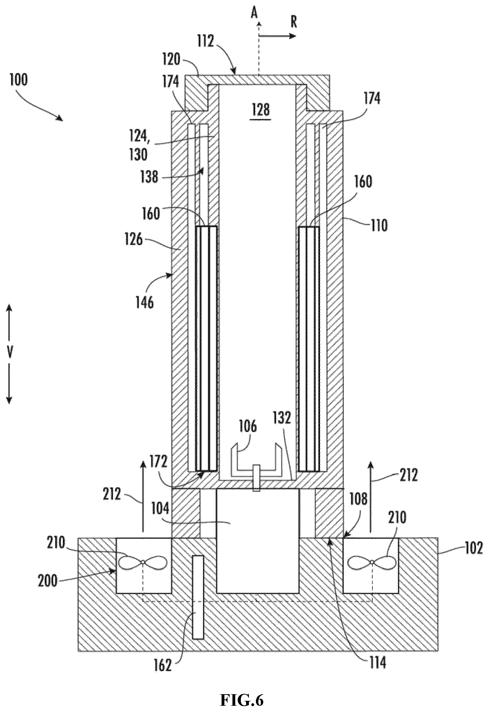

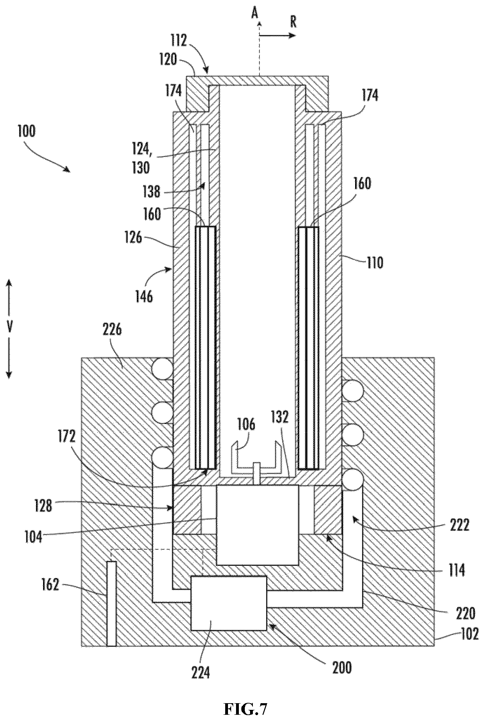

Turning now generally to FIGS. 6 and 7, further exemplary embodiments of blender appliance 100 are illustrated. As shown, blender appliance 100 may include one or more secondary heat-exchange assemblies 200. In some embodiments, a secondary heat-exchange assembly 200 is mounted to or included with base 102. Secondary heat-exchange assembly 200 may be operatively coupled to controller 162, which may be further configured to direct activation or operation of secondary heat-exchange assembly 200. For instance, when container body 110 is received on base 102 secondary heat-exchange assembly 200 may generally be activated (e.g., to promote heat exchange between container body 110 and one or more motivated fluids).

As shown in FIG. 6, secondary heat-exchange assembly 200 may include or be provided as one or more fans 210 (e.g., axial fans, tangential fans, etc.) mounted to base 102. In some embodiments, each fan 210 is generally directed toward the receiving zone 108 (e.g., upward). Thus, when container body 110 is provided on receiving zone 108, the fan(s) 210 may be directed at container body 110. As the fan(s) 210 rotate, a cooling airflow 212 may thus be motivated across the outer surface 146 of conduction wall 126 through the ambient environment opposite the insulation chamber 138 or fluid cavity 128. In turn, the cooling airflow 212 may generally facilitate the heat exchange between conduction wall 126 and the surrounding or ambient environment.

As shown in FIG. 7, secondary heat-exchange assembly 200 may include or be provided as a sealed cooling system 220. Generally, sealed cooling system 220 includes one or more conduits or channels defining a flow path 222 through which a volume of refrigerant (e.g., liquid coolant) is selectively motivated. For instance, a pump or compressor 224 may be mounted along the flow path 222 to motivate the refrigerant. Optionally, sealed cooling system 220 includes one or more additional evaporators, condensers, or expansion valves for executing a closed-loop vapor-compression cycle, as is understood.

In certain embodiments, the flow path 222 of sealed cooling system 220 extends along the receiving zone 108. For instance, flow path 222 may extend about receiving zone 108. Optionally, a guide wall 226 of base 102 may define receiving zone 108 as an open chamber within which at least a portion of container body 110 may be inserted. Optionally, the guide wall 226 may form a sleeve matched in size and shape to container body 110. Thus, guide wall 226 may contact container body 110 in the receiving zone 108. Additionally or alternatively, flow path 222 may extend within guide wall 226. When inserted within the receiving zone 108, container body 110 may be in conductive thermal communication with flow path 222. While the pump or compressor 224 is active, a cooling fluid flow may be motivated through the flow path 222 about container body 110. Heat may be conducted from the outer surface 146 to the refrigerant (e.g., liquid coolant) within the flow path 222. In turn, the cooling fluid flow may absorb heat from fluid cavity 128 through conduction wall 126.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A blender appliance defining a vertical direction and a radial direction, the blender appliance comprising:
a container body comprising an inner shell and a conduction wall, the inner shell defining a fluid cavity, and the conduction wall being spaced apart from the fluid cavity outward along the radial direction;
a rotatable blade rotatably disposed within the fluid cavity;
a motor in selective mechanical communication with the rotatable blade to motivate rotation thereof; and
a thermo-electric heat exchanger mounted within the container body in thermal communication with the fluid cavity.

2. The blender appliance of claim 1, wherein the thermo-electric heat exchanger comprises a first heat exchange end and a second heat exchange end between which heat is selectively directed, wherein the first heat exchange end is positioned in contact with the inner shell, and wherein the second heat exchange end is positioned in contact with the conduction wall.

3. The blender appliance of claim 1, further comprising a conduction pipe extending from the thermo-electric heat exchanger within the container body, at least a portion of the conduction pipe being positioned between the inner shell and the conduction wall.

4. The blender appliance of claim 3, wherein the conduction pipe is positioned between the thermo-electric heat exchanger and the conduction wall.

5. The blender appliance of claim 1, wherein the container body further comprises a plurality of fins extending radially outward from the conduction wall.

6. The blender appliance of claim 1, further comprising:
a base defining a receiving zone on which the container body is selectively received; and
a fan mounted within the base and directed at the receiving zone to motivate an airflow across an outer surface of the container body.

7. The blender appliance of claim 1, further comprising:
a base defining a receiving zone on which the container body is selectively received; and
a sealed cooling assembly defining a flow path through which a volume of refrigerant is selectively motivated, the sealed cooling assembly being mounted within the base, the flow path extending along the receiving zone.

8. The blender appliance of claim 1, wherein the thermo-electric heat exchanger is a Peltier device.

9. The blender appliance of claim 1, further comprising:
a base defining a receiving zone on which the container body is selectively received; and
a magnetic drive assembly comprising a motor housed within the base in selective magnetic communication within the rotatable blade to motivate rotation thereof within the fluid cavity.

10. The blender appliance of claim 1, wherein an insulation chamber is defined between the inner shell and the conduction wall along the radial direction.

11. A blender appliance defining a vertical direction and a radial direction, the blender appliance comprising:
a container body comprising an inner shell and a conduction wall, the inner shell defining a fluid cavity, and the conduction wall being spaced apart from the fluid cavity outward along the radial direction, wherein an insulation chamber is defined between the inner shell and the conduction wall along the radial direction;
a rotatable blade rotatably disposed within the fluid cavity;
a motor in selective mechanical communication with the rotatable blade to motivate rotation thereof; and
a thermo-electric heat exchanger mounted within the container body in thermal communication with the fluid cavity, the thermo-electric heat exchanger being positioned within at least a portion of the insulation chamber.

12. The blender appliance of claim 11, wherein the thermo-electric heat exchanger comprises a first heat exchange end and a second heat exchange end between which heat is selectively directed, wherein the first heat exchange end is positioned in contact with the inner shell, and wherein the second heat exchange end is positioned in contact with the conduction wall.

13. The blender appliance of claim 11, further comprising a conduction pipe extending from the thermo-electric heat exchanger within the container body, at least a portion of the conduction pipe being positioned between the inner shell and the conduction wall.

14. The blender appliance of claim 13, wherein the conduction pipe is positioned between the thermo-electric heat exchanger and the conduction wall.

15. The blender appliance of claim 11, wherein the container body further comprises a plurality of fins extending radially outward from the conduction wall.

16. The blender appliance of claim 11, further comprising:
a base defining a receiving zone on which the container body is selectively received; and
a fan mounted within the base and directed at the receiving zone to motivate an airflow across an outer surface of the container body.

17. The blender appliance of claim 11, further comprising:
a base defining a receiving zone on which the container body is selectively received; and
a sealed cooling assembly defining a flow path through which a volume of refrigerant is selectively motivated, the sealed cooling assembly being mounted within the base, the flow path extending along the receiving zone.

18. The blender appliance of claim 11, wherein the thermo-electric heat exchanger is a Peltier device.

19. The blender appliance of claim 11, further comprising:
a base defining a receiving zone on which the container body is selectively received; and
a magnetic drive assembly comprising a motor housed within the base in selective magnetic communication within the rotatable blade to motivate rotation thereof within the fluid cavity.
